Europäisches Patentamt

European Patent Office

Office européen des brevets

(19)

(11)     **EP 1 720 106 A1**

(12)     **EUROPÄISCHE PATENTANMELDUNG**

(43) Veröffentlichungstag:
  **08.11.2006   Patentblatt 2006/45**

(51) Int Cl.:
  ***G06F 17/30*** (2006.01)

(21) Anmeldenummer: **05009772.4**

(22) Anmeldetag: **04.05.2005**

(84) Benannte Vertragsstaaten:
  **AT BE BG CH CY CZ DE DK EE ES FI FR GB GR HU IE IS IT LI LT LU MC NL PL PT RO SE SI SK TR**
  Benannte Erstreckungsstaaten:
  **AL BA HR LV MK YU**

(71) Anmelder: **Lycos Europe GmbH**
  **33332 Gütersloh (DE)**

(72) Erfinder:
  • **Wagner, Oliver**
    **33824 Werther (DE)**

  • **Servatius, Thomas**
    **33442 Herzebrock-Clarholz (DE)**
  • **Köster, Oliver**
    **33613 Bielefeld (DE)**
  • **Houste, Francois**
    **77400 Lagny-Sur-Marne (FR)**

(74) Vertreter: **Von Renesse, Dorothea et al**
  **König Szynka Tilmann von Renesse**
  **Patentanwälte Partnerschaft**
  **Postfach 11 09 46**
  **40509 Düsseldorf (DE)**

(54)     **Verfahren zur Kategorisierung und graphischen Darstellung von Online Postings**

(57)     Die Erfindung betrifft ein Verfahren zur Kategorisierung und graphischen Darstellung von Online Postings, wobei einzelne Daten bzw. Postings einer Gesamtdatenmenge zunächst nach Kategorien gesichtet und sortiert and anschliessend anhand dieser Kategorien graphisch dargestellt werden, wobei die einzelnen Daten bzw. Postings in der graphischen Darstellung jeweils einzeln identifizierbar sind.

**Fig. 1**

EP 1 720 106 A1

**Beschreibung**

Die Erfindung betrifft ein Verfahren zur Datenverarbeitung, insbesondere von Daten aus der Blogosphere.

Die Menge der dem einzelnen Verbraucher potentiell zur Verfügung stehenden Informationen (Daten) hat sich in den letzten Jahrzehnten vor allem durch die Möglichkeiten der modernen Datenverarbeitung sowie der Verbreitung der Internetnutzung um etliches vervielfacht. Demnach ist der einzelne Nutzer sowohl im privaten als auch im beruflichen Umfeld zunehmend vor die Herausforderung gestellt, diese Informationsflut zu verarbeiten. Häufig trennt nur eine vorherige sinnvolle Aufarbeitung der Daten ihre die fruchtbare Nutzung von der hoffnungslosen Überforderung des Nutzers.

Mit der stetig steigenden Datenmenge steigen auch die Anforderungen an die Hilfsmittel zur Datenverarbeitung und Datenpräsentation. Die bekannten Hilfsmittel erschöpfen sich jedoch meist darin, die Daten über benutzerdefinierte Suchbegriffe zu sichten und anschließend in Trefferlisten anzuordnen. Die Trefferlisten können dabei sortiert sein, so z.B. nach Datum, Größe, Themengebiet oder Verfasser. Diese Kategorien erfüllen jedoch zumeist nicht mehr die Benutzererwartungen.

Neuere Hilfsmittel der Datenverarbeitung basieren z.T. auf einer Kategorisierung der Daten nach kombinierten Schlagworten oder Begriffen, die bestimmten Objekten, Themen oder Phänomenen durch eine Nutzergemeinschaft zugewiesen werden. Diese Form der Kategorisierung ist unter dem Neologismus "Folksonomie" bekannt.

Diese Systeme haben zwar den Vorteil, daß die Kategorisierung der Daten differenzierter erfolgt. Sie haben jedoch nach wie vor den Nachteil, daß die gesichteten Daten selber für den Nutzer nicht in ausreichendem Maße handhabbar sind. Auch hier geht der Nutzer in der Datenflut unter, d.h. er erhält keine Übersicht über die ihm zur Verfügung stehenden Daten und kann demnach auch nicht auf die für ihn relevanten Daten zugreifen.

Der Erfindung liegt daher die Aufgabe zugrunde, ein Verfahren und ein System zur Datenverarbeitung zur Verfügung zu stellen, daß eine große Datenmenge erfaßbar und zugleich einzelne Datenpakete daraus für den Nutzer zugänglich macht.

Diese Aufgabe wird gelöst durch ein Verfahren nach Anspruch 1. Vorteilhafte Weiterentwicklungen sind Gegenstand entsprechender Unteransprüche oder Nebenansprüche.

Das erfindungsgemäße Verfahren beruht auf dem Grundgedanken, eine große Datenmenge nach Kategorien vorzusortieren und die Daten in diesen Kategorien zusammenzufassen. Die Zusammenfassung erfolgt über eine gemeinsame graphische Darstellung. Diese graphische Darstellung ermöglicht einen ersten Überblick über die nach der Sortierung gewonnene Datenmenge. Innerhalb dieser Zusammenfassung bleiben die einzelnen Datenpakete aber für den Nutzer identifizierbar und ggf. auch abrufbar, d.h. der Nutzer hat einen unmittelbaren Zugriff auf das einzelne Datenpaket ausgehend von der Graphik. Der Nutzer kann daher das für ihn interessante Datenpaket ausgehend von einer visualisierten kategorisierten Gesamtübersicht unmittelbar auswählen und ggf. auch anwählen.

Somit ermöglicht das erfindungsgemäße Verfahren einerseits eine Übersicht über die kategorisierte Datenmenge und andererseits das Auffinden eines einzelnen Datenpakets innerhalb der Gesamtdatenmenge. Der Nutzer kann zudem das einzelne Datenpaket in den Kontext der Gesamtdatenmenge einordnen. Dies stellt für ihn einen zusätzlichen Informationsgewinn dar, der über die Information des einzelnen Datenpakets hinausgeht. Das erfindungsgemäße Verfahren macht damit komplexe Daten/Informationen in einer gemeinsamen Schnittstelle erfaßbar und navigierbar.

Die von dem erfindungsgemäßen Verfahren zur Sortierung der Datenpakete herangezogenen Kategorien können benutzerunabhängig, benutzerabhängig oder benutzerdefiniert sein. So kann z.B. die Sortierung - wie in den bekannten Verfahren üblich - nach den klassischen Kategorien Datum, Verfasser, Dateigröße etc. erfolgen. Dies wäre eine benutzerunabhängige Sortierung. Zusätzlich oder alternativ kann jedoch eine Kategorisierung auch z.B. nach der Häufigkeit des Aufrufs eines Datenpakets oder nach der Anzahl der Kommentierung des Datenpakets durch Dritte vorgenommen werden. Da diese Kategorie von der tatsächlichen Nutzung der Datenpakete durch die Nutzer der Daten abhängig, handelt es sich um benutzerabhängige Kategorien. Daneben ist es auch möglich vorzusehen, daß der Nutzer des erfindungsgemäßen Verfahrens selber eine Kategorie vorgibt (benutzerdefinierte Kategorie). Selbstverständlich können diese Kategorien jeweils kombiniert werden.

In einer vorteilhaften Ausführungsform nimmt das erfindungsgemäße Verfahren eine Bewertung der benutzerabhängigen oder benutzerunabhängigen Angaben vor. So kann beispielsweise ein Datenpaket nach bestimmten, von dem jeweiligen Verfasser benutzten Begriffen gesichtet und die aufgefundenen Begriffe von dem erfindungsgemäßen Verfahren bewertet (qualifiziert) werden. Dies kann beispielsweise durch die Vergabe von Zahlenwerten erfolgen. Die graphische Übersicht über die Datenmenge kann dann zumindest teilweise - auf dieser bewertenden Sichtung basieren.

Für die Visualisierung der Darstellung der Datenmenge einschließlich der Datenpakete stehen grundsätzlich alle denkbaren graphischen Möglichkeiten zur Verfügung. Es ist jedoch besonders vorteilhaft, graphische Elemente zu verwenden, die eine Feineinteilung erlauben. Die jeweilige Feineinteilung kann dann einem einzelnen Datenpaket oder einer ausgewählten Anzahl von einzelnen Datenpaketen zugeordnet werden. Vorteilhafterweise enthält die graphische Zusammenschau den jeweiligen Link des einzelnen Datenpakets, so daß der Nutzer unmittelbar auf das Datenpaket zugreifen kann. Es ist aber auch möglich, daß das Datenpaket lediglich über seine Identifikationsdaten (Kontextinformation) identifizierbar ist.

In einer vorteilhaften Ausführungsform kann die zusammenfassende und/oder bewertende Visualisierung der Datenmenge auf eine zuvor definierte Auswahl von Datenpaketen beschränkt sein. Dies kann vor allem dann vorteilhaft sein, wenn die Gesamtanzahl aller Datenpakete eine handhabbare Anzahl deutlich überschreitet. Die genaue Anzahl einer ausgewählten Datenmenge kann variieren und ist u.U. auch davon bestimmt, welche Kategorien zu welchem Zweck gesichtet werden.

Nachfolgend wird das erfindungsgemäße Verfahren anhand eines Ausführungsbeispiels des näheren erläutert:

**Beispiel: "Moodometer"**

1. Übersicht

Das erfindungsgemäße Verfahren in seiner Anwendung als Stimmungsbarometer ("Moodometer") einer Internetgemeinschaft bietet auf der Startseite dieser Gemeinschaft einen schnellen Überblick über folgende Fragen:

- welche Webseiten (Einträge) der Nutzer wurden heute aktualisiert?
- welche Stimmungslage überwog heute bei den Verfassern der Einträge?
- welche Einträge wurden besonders häufig gelesen?
- welche Einträge wurden besonders häufig kommentiert?

Diese Informationen werden erfindungsgemäß erhoben, verarbeitet und visualisiert.

Bei der Visualisierung symbolisieren vier Balken die vier möglichen Stimmungslagen, zwischen denen der Nutzer beim Verfassen eines Eintrags auswählen kann. Ein Farbleitsystem unterstützt diese Darstellung. Die Stimmungslage, die von den meisten Verfassern für den aktuellen Tag ausgewählt wird, bestimmt die Hintergrundfarbe der Graphik. Die Balkenlänge visualisiert das prozentuale Verhältnis der Stimmungslagen untereinander.

Jeder Balken ist durch vertikale Striche unterteilt. Jede Unterteilung steht für ein einzelnes Datenpaket bzw. einen Eintrag (Posting) innerhalb einer Userseite (Blog). Ursprünglich weisen die Unterteilungen dieselbe Breite und dieselbe Farbe auf. In Abhängigkeit von der Anzahl der Seitenaufrufe eines Postings wird die Breite einer Unterteilung vergrößert. Somit werden die Unterteilungen für die häufig aufgerufenen Postings größer. Damit wird ihre Relevanz für den Betrachter optisch hervorgehoben.

Hinterlassen einzelnen Nutzer Kommentare zu den Postings eines Blogs, fließt dies ebenfalls in die optische Aufbereitung der Einträge ein. Ein häufig kommentierter Beitrag bekommt eine intensivere Farbe. Sein optisches Erscheinungsbild wird somit nochmals deutlicher.

Mit Hilfe des erfindungsgemäßen Verfahrens wird es dem User daher möglich zu erkennen, welche Einträge in welcher Stimmungslage eingingen, wie häufig andere Nutzer auf diesen Eintrag zurückgriffen und ihn kommentiert haben. Eine thematische Vorauswahl kann bereits über die Auswahl der gesichteten Webseiten erfolgen.

Bei Mausberührung eines Striches gibt dieser Auskunft darüber, welchen Titel der Beitrag trägt und wie das Blog heißt. Ein Klick auf den Strich führt den User auf die entsprechende Seite.

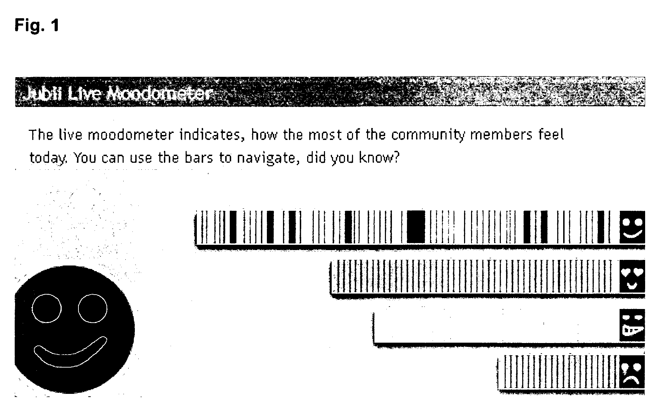

Die Fig. 1 gibt die graphische Übersicht des "Moodometers" wieder.

2. Technische Umsetzung

2.1. Datensammlung

Eine Blogging Engine erstellt nach dem Verfassen eines Beitrages einen neuen Eintrag im RSS Feed des Blogs. Alle RSS Feeds werden an zentraler Stelle ausgewertet und die Daten werden dabei in folgende Informationen gesplittet:

Stimmungslage ("Mood"):

Jeder Eintrag (Posting) wird von dem Verfasser mit einer Stimmungslage gekennzeichnet. Die Stimmungen reichen dabei von "glücklich" über "verliebt" bis "sauer/aggressiv" oder "traurig". Das erfindungsgemäße System bewertet jede Stimmungslage mit einem Wert zwischen 0 und 4; 0 steht für "neutral" bzw. keine Stimmung vergeben. Neutrale Postings werden weder für das Moodometer noch für die Rankings gewertet. Für die Auswertung der Stimmungslage des Tages und für die Generierung der nach Stimmung sortierten Treffer wird diese Information kombiniert mit dem Link zu dem referenzierenden Blog, dem Titel und Datum des Eintrages und dessen ID und in einer Tabelle gespeichert.

Kommentare:

Die Blogging Engine meldet die Anzahl eingegangener Kommentare an eine weitere Datenbanktabelle zusammen mit der Informationen des Blognamens, der Artikel ID und des Datums des Postings.

2.2. Datenaufbereitung

Das Moodometer nutzt XML als Format für den Datenimport. Beim Aufruf der Startseite kommuniziert die eingebettete Flashdatei mit einer XML Datei (XML-Feed), aus der die Inhalte generiert und visualisiert werden.

Die XML-Datei enthält 100 Zeilen, wobei jede zu einen bestimmten Link gehört, der auf der Moodometer Abbildung dargestellt wird.

Die XML- Datei enthält folgende Attribute:

id enthält die eindeutige id der entsprechenden Zeile

name enthält den Seitennamen der Seite, auf der sich die entsprechende Sektion befindet, auf die das Moodometer verlinkt.

last enthält den Text, der in einer Popup-Layer über dem Moodometer eingeblendet wird

popu enthält einen Wert zwischen 0 und 100, der die aktuelle Popularität der entsprechenden Seite (im Verhältnis zu den 99 anderen Seiten) bestimmt. 100 entspricht der höchsten Anzahl an Page Impression (Seitenaufrufen) im Vergleich zu den anderen Seiten, die im XML-Feed geliefert werden. Die anderen Webseiten werden proportional dazu berechnet nach der folgenden Formel:

$$popu\_site1 = (pages\_Imp1/pages\_impTop)*100$$

popu site1 ist der popu-Wert der für die Seite berechnet werden soll

pages Imp1 ist die Anzahl der Aufrufe der Seite, für die popu_site1 berechnet werden soll.

Pages ImpTop ist die Anzahl der Aufrufe der populärsten Seite.

react enthält einen Wert zwischen 0 und 100, der das Verhältnis der Reaktionen der letzten Mitteilung auf der entsprechenden Seite, d.h. das Verhältnis der Anzahl Reaktionen dieser Seite verglichen mit der Anzahl der Reaktionen der übrigen 99 Seiten wiedergibt. 100 erhält die Seite, die die meisten Reaktionen auf die letzte Nachricht erhalten hat. Die react-Werte der anderen Websites werden entsprechend proportional dazu berechnet, nach der folgenden Formel:

$$react\_site1 = (comment1/commentTop)*100$$

React site1 ist der react-Wert, der für die Seite berechnet werden soll.

comment1 ist die Anzahl der Reaktionen der zu berechnenden Seite.

commentTop ist die Anzahl der Reaktionen der Seite, die die meisten Reaktionen auf die letzte Nachricht erhalten hat.

mood enthält einen Wert von 1 bis 4, der die Stimmung mit der die letzte geschriebene Mitteilung der entsprechenden Seite repräsentiert.

Weitere Informationen, die zum Betrieb der Anwendung notwendig sind, werden aus einer weiteren XML-Datei geladen. Diese Datei enthält alle Texte und die Grundstruktur des Links. Diese wird innerhalb des Moodometers mit dem Inhalt des name-Attributs ergänzt, so daß dann eine komplette URL entsteht.

2.3. Visualisierung

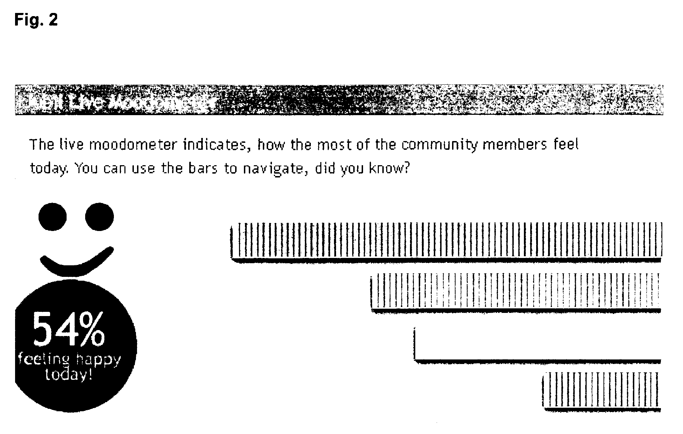

Die Visualisierung des Moodometers setzt sich im wesentlichen aus den folgenden Elementen zusammen (**Fig. 2**):

- Hintergrundfarbe: Diese Farbe zeigt die Stimmungslage des Tages an und variiert demnach in Abhängigkeit von den Einträgen der User zwischen pink, orange, grün und blau und kann mit einem leichten Verlauf versehen werden.
- Ein großes Kreiselement enthält das Visual/Smiley, das die Tagesstimmung visualisiert, dieses Visual/Smiley wird auch neben den Prozentleisten angezeigt.
- Vier Prozentbalken, die die Verteilung der Postings auf die Stimmungen wiedergeben. Diese werden in der Reihenfolge der Prozentzahlen angeordnet.
- Die 100 letzten Postings werden jeweils durch kleine Zellen dargestellt, die Verteilung der Zellen auf die Balken ergibt sich ebenfalls aus den Prozentzahlen.

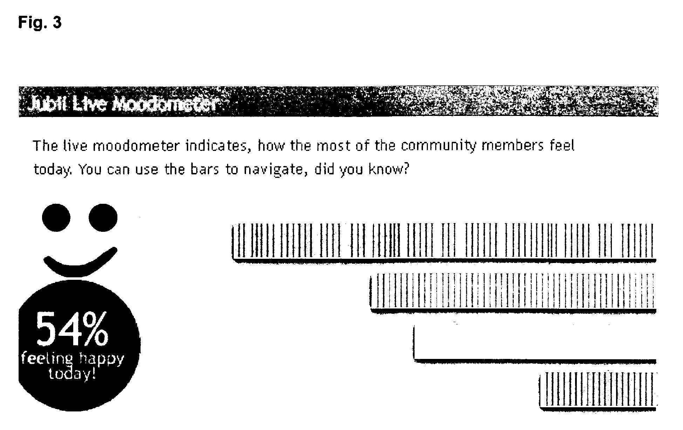

In **Fig. 3** werden die Zellen gewichtet dargestellt. Je mehr Aufrufe ein Posting erhalten hat, desto größer ist die Breite der Unterteilung. So wir die Relevanz eines Postings hervorgehoben.

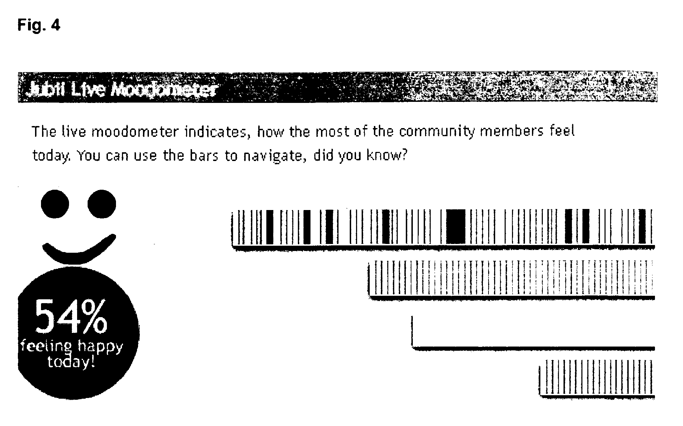

**Fig. 4** verdeutlicht die Verwendung der Intensität der Farbe zur Darstellung der Relevanz eines Eintrags. Einträge mit mehr Kommentaren oder Trackbacks bekommen intensivere Farben, um dieses kenntlich zu machen. Die Grundfarbe der Darstellung kann mit einer anderen Gesamttagesstimmung variieren.

Über die Unterteilungen der Balken sind die einzelnen Einträge verlinkt und werden für den User zugänglich gemacht. Bei MouseOver zeigen die Balken eine Kontextinformation an, die den Namen des Blogs sowie den Titel des Postings offenbaren. Per Klick erreicht man genau diesen Eintrag im entsprechenden Blog.

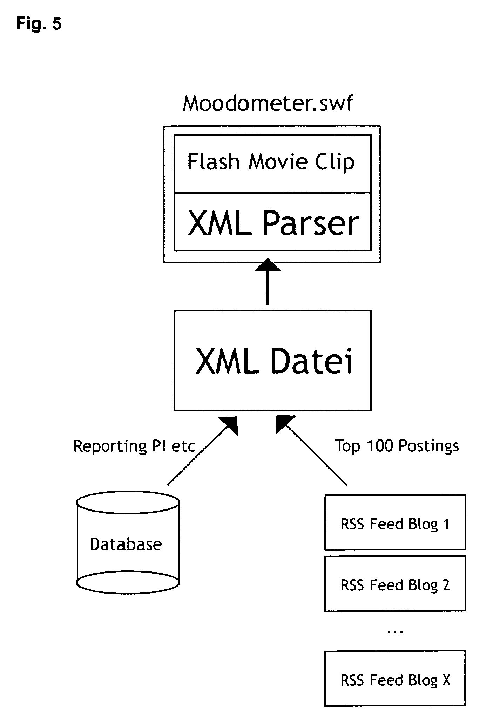

**Fig. 5** stellt das erfindungsgemäße Verfahren aus der logischen Sicht dar.

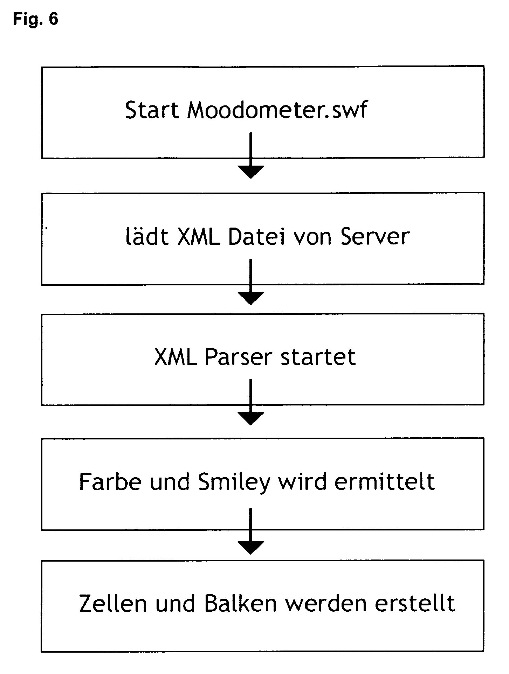

**Fig. 6** stellt ein Fließdiagramm für den Dateninput nach dem erfindungsgemäßen Verfahrens dar.

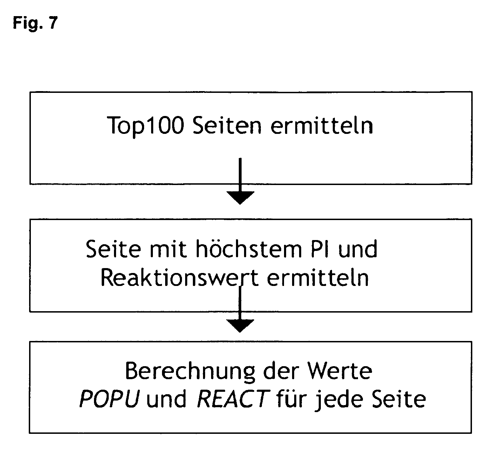

**Fig. 7** gibt eine Übersicht über den Aggregierungsprozeß

**Patentansprüche**

1. Verfahren zur Datenverarbeitung, **dadurch gekennzeichnet, daß** einzelne Datenpakete eine Datengesamtmenge zunächst nach Kategorien gesichtet und sortiert und anschließend nach diesen Kategorien graphisch zusammengefaßt werden, wobei die einzelnen Datenpakete in der zusammenfassenden Graphik jeweils einzeln identifizierbar sind.

2. Verfahren nach Anspruch 1, **dadurch gekennzeichnet, daß** die einzelnen Datenpakete benutzerunabhängig gesichtet werden.

3. Verfahren nach einem der vorherigen Ansprüche, **dadurch gekennzeichnet, daß** die Datenpakete nach benutzerdefinierte Kategorien gesichtet werden.

4. Verfahren zur Datenverarbeitung nach einem der vorherigen Ansprüche, **dadurch gekennzeichnet, daß** die Datenpakete über die benutzerunabhängigen Kategorien vorsortiert und durch die benutzerdefinierten Angaben nachsortiert werden.

5. Verfahren nach einem der vorherigen Ansprüche, **dadurch gekennzeichnet, daß** eine Bewertung der Datenpakete erfolgt.

6. Verfahren nach einem der vorherigen Ansprüche, **dadurch gekennzeichnet, daß** die Graphik die Kontextinformation eines einzelnen Datenpakets anzeigen kann.

7. Verfahren nach einem der vorherigen Ansprüche, **dadurch gekennzeichnet, daß** die Datenpakete aus der Graphik abrufbar sind.

8. Verfahren nach einem der vorherigen Ansprüche, **dadurch gekennzeichnet, daß** der Vorgang der Sichtung, Sortierung und graphischen Aufarbeitung ggf. mehrfach wiederholt wird.

9. Verfahren nach einem der vorherigen Ansprüche, **dadurch gekennzeichnet, daß** nur eine definierte Auswahl aller verfügbaren Datenpakete verarbeitet wird.

10. Verfahren nach einem der vorherigen Ansprüche, **dadurch gekennzeichnet, daß** sich die Datengesamtmenge und/oder die einzelnen Datenpakete verändern.

11. Verfahren nach einem der vorherigen Ansprüche, **dadurch gekennzeichnet, daß** die Datenmenge und/oder die einzelnen Datenpakete aus der Internetgemeinschaft, insbesondere aus der Blogosphere stammen.

12. System zur Datenverarbeitung mit

    - einem Datenträger zum Speichern einer Datengesamtmenge enthaltend einzelne Datenpakete;
    - einer Auswerteeinheit zur Sichtung der Gesamtdatenmenge nach festgelegten Kategorien;
    - einer Graphikeinheit zur Visualisierung der Ergebnisse der Sichtung der Auswerteeinheit

eine Schnittstelle für mindestens einen Nutzer.

**Fig. 1**

Jubli Live Moodometer

The live moodometer indicates, how the most of the community members feel today. You can use the bars to navigate, did you know?

**Fig. 2**

The live moodometer indicates, how the most of the community members feel today. You can use the bars to navigate, did you know?

54%
feeling happy
today!

**Fig. 3**

Jubii Live Moodometer

The live moodometer indicates, how the most of the community members feel today. You can use the bars to navigate, did you know?

54% feeling happy today!

**Fig. 4**

**Jubii Live Moodometer**

The live moodometer indicates, how the most of the community members feel today. You can use the bars to navigate, did you know?

**54%** feeling happy today!

**Fig. 5**

Moodometer.swf

| Flash Movie Clip |
|---|
| XML Parser |

XML Datei

Reporting PI etc

Top 100 Postings

Database

| RSS Feed Blog 1 |
|---|

| RSS Feed Blog 2 |
|---|

. . .

| RSS Feed Blog X |
|---|

**Fig. 6**

```
┌──────────────────────────────────────┐
│                                      │
│        Start Moodometer.swf          │
│                                      │
└──────────────────────────────────────┘
                    │
                    ▼
┌──────────────────────────────────────┐
│                                      │
│       lädt XML Datei von Server      │
│                                      │
└──────────────────────────────────────┘
                    │
                    ▼
┌──────────────────────────────────────┐
│                                      │
│          XML Parser startet          │
│                                      │
└──────────────────────────────────────┘
                    │
                    ▼
┌──────────────────────────────────────┐
│                                      │
│    Farbe und Smiley wird ermittelt   │
│                                      │
└──────────────────────────────────────┘
                    │
                    ▼
┌──────────────────────────────────────┐
│                                      │
│    Zellen und Balken werden erstellt │
│                                      │
└──────────────────────────────────────┘
```

**Fig. 7**

| Top100 Seiten ermitteln |
|---|

| Seite mit höchstem PI und Reaktionswert ermitteln |
|---|

| Berechnung der Werte *POPU* und *REACT* für jede Seite |
|---|

**Europäisches Patentamt**

# EUROPÄISCHER RECHERCHENBERICHT

**Nummer der Anmeldung**

EP 05 00 9772

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | BRETT TAYLOR: "Mood-O-Meter" [Online] 5. September 2002 (2002-09-05), N.A. , XP002356627 Gefunden im Internet: URL:http://www.webroot.co.nz/moodometer/readme.html> [gefunden am 2005-11-29] * das ganze Dokument * ----- | 1-12 | G06F17/30 |
| X | EP 1 207 465 A (CANON KABUSHIKI KAISHA) 22. Mai 2002 (2002-05-22) * Zusammenfassung; Ansprüche 30-41; Abbildungen 14-17 * ----- | 1-12 | |
| X | MUKHERJEA SOUGATA ET AL: "Using clustering and visualization for refining the results of a WWW image search engine" PROCEEDINGS OF THE 1998 ACM CIKM INTERNATIONAL CONFERENCE ON INFORMATION AND KNOWLEDGE MANAGEMENT. CIKM '98. BETHESDA, MD, NOV. 3 - 7, 1998, ACM CIKM INTERNATIONAL CONFERENCE ON INFORMATION AND KNOWLEDGE MANAGEMENT, NEW YORK, NY : ACM, US, Bd. CONF. 7, 3. November 1998 (1998-11-03), Seiten 29-35, XP002284975 ISBN: 1-58113-061-9 * Seite 32, Absatz 4; Abbildung 6 * ----- | 1-12 | RECHERCHIERTE SACHGEBIETE (IPC) G06F |
| A | REIN G L: "A group mood meter" N.A., Bd. iv, 8. Januar 1991 (1991-01-08), Seiten 308-323, XP010093400 * Zusammenfassung * ----- | 1-12 | |
| A | EP 1 030 281 A (HUDSON CO., LTD) 23. August 2000 (2000-08-23) * Zusammenfassung * ----- | 1-12 | |

Der vorliegende Recherchenbericht wurde für alle Patentansprüche erstellt

| Recherchenort | Abschlußdatum der Recherche | Prüfer |
|---|---|---|
| München | 29. November 2005 | May, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**  EP 05 00 9772

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-11-2005

| Im Recherchenbericht angeführtes Patentdokument | | Datum der Veröffentlichung | Mitglied(er) der Patentfamilie | | Datum der Veröffentlichung |
|---|---|---|---|---|---|
| EP 1207465 | A | 22-05-2002 | JP | 3658358 B2 | 08-06-2005 |
| | | | JP | 2002197113 A | 12-07-2002 |
| | | | US | 2002087535 A1 | 04-07-2002 |
| EP 1030281 | A | 23-08-2000 | CA | 2296473 A1 | 18-02-1999 |
| | | | CN | 1265766 A | 06-09-2000 |
| | | | WO | 9908252 A1 | 18-02-1999 |
| | | | JP | 3580519 B2 | 27-10-2004 |
| | | | JP | 11052834 A | 26-02-1999 |
| | | | TW | 409231 B | 21-10-2000 |
| | | | US | 6705972 B1 | 16-03-2004 |

EPO FORM P0461

Für nähere Einzelheiten zu diesem Anhang : siehe Amtsblatt des Europäischen Patentamts, Nr.12/82